# EUROPÄISCHE PATENTANMELDUNG

(11) **EP 1 080 822 A2**
(43) Veröffentlichungstag der Anmeldung: **07.03.2001**
(21) Anmeldenummer: 00116918.4
(22) Anmeldetag: 05.08.2000
(51) Int. Cl.: B23K 26/08, A24C 5/60

(54) **Verfahren und Vorrichtung zum Bearbeiten eines Hüllmaterials von Zigaretten**

(30) Priorität: 18.08.1999 DE 19939206
(71) Anmelder: Hauni Maschinenbau AG, 21033 Hamburg (DE)
(72) Erfinder: Dombek, Manfred, 21521 Dassendorf (DE); Voss, Helmut, 25551 Lokstedt (DE)

(57) **Zusammenfassung**

Es werden ein Verfahren und eine Vorrichtung zum Bearbeiten eines Hüllmaterials von Zigaretten beschrieben. Das Hüllmaterial (13) wird nacheinander durch eine Perforationszone (41) und eine Schneidzone (42) bewegt. Ein Laser (49) erzeugt eine Laserstrahlung (51), die in jedem Maschinentakt T aus einem nicht gepulsten Dauerstrichanteil P₁ und einem gepulsten Strahlungsanteil P₂ besteht. Der Dauerstrichanteil P₁ wird in der Schneidzone (42) zum Abtrennen von Belagblättchen (47) von dem Hüllmaterialstreifen (13) genutzt. Mit dem gepulsten Strahlungsanteil P₂ werden in dem Hüllmaterial (13) Perforationen (44) erzeugt. Das Verfahren und die Vorrichtung machen es möglich, für das Perforieren und das Schneiden der Hüllmaterialbahn (13) nacheinander jeweils die volle Laserleistung zu nutzen. Dadurch wird der Laser (49) optimal genutzt.

## Beschreibung

Die Erfindung betrifft ein Verfahren zum Bearbeiten eines Hüllmaterials von Zigaretten oder von anderen rauchbaren stabförmigen Artikeln der tabakverarbeitenden Industrie, bei dem in einem Maschinentakt mittels einer von einem Laser abgegebenen und in vorgegebene Bearbeitungszonen auf das Hüllmaterial fokussierten Strahlung die für eine jede Zigarette vorgesehene Bearbeitung des Hüllmaterials vorgenommen wird.

Die Erfindung betrifft außerdem eine Vorrichtung zum Bearbeiten eines Bahnmaterials, insbesondere eines Hüllmaterials von Zigaretten oder von anderen rauchbaren stabförmigen Artikeln der tabakverarbeitenden Industrie mit Fördermitteln zum Bewegen des Hüllmaterials durch wenigstens zwei Bearbeitungszonen, einem Laser zum Erzeugen einer Laserstrahlung und Strahlführungsmitteln zum Leiten und Fokussieren der Laserstrahlung zur Hüllmaterialbearbeitung in wenigstens eine vom Hüllmaterial durchlaufene Bearbeitungszone.

Auch wenn die vorliegende Erfindung im folgenden im Zusammenhang mit ihrer Anwendung bei der Herstellung von Filterzigaretten beschrieben wird, ist sie allgemein für eine entsprechende Bearbeitung von laufenden Materialbahnen insbesondere aus Papier oder dergleichen einsetzbar. Sie ist also nicht auf die Bearbeitung des Hüllmaterials von Zigaretten beschränkt.

Unter 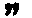 Hüllmaterial von Zigaretten" ist im hier vorliegenden Zusammenhang ein Belagpapierstreifen zu verstehen, von dem nacheinander Abschnitte als sogenannte Belagblättchen abgetrennt werden, oder die äußere Zigarettenhülle, die im Verlauf des Produktionsprozesses zur Erzeugung von Perforationen mit einer Laserstrahlung bearbeitet wird. Andere rauchbare stabförmige Artikel der tabakverarbeitenden Industrie sind beispielsweise Stumpen, Zigarillos und dergleichen, die ähnlich wie Zigaretten hergestellt werden.

Die Herstellung von Filterzigaretten erfolgt auf Filteransetzmaschinen, indem Gruppen aus axial zueinander ausgerichteten Tabakstäben und Filterabschnitten durch Umwickeln mit beleimten Belagblättchen, die von einem kontinuierlich zugeführten Belagpapierstreifen abgetrennt werden, miteinander verbunden werden. Hierbei handelt es sich um einen kontinuierlichen Vorgang. Wenn in diesem Zusammenhang dennoch von einem 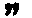 Maschinentakt" gesprochen wird, so ist darunter der Zeitraum zu verstehen, in welchem ein nachfolgender Artikel die Position des vorangehenden Artikels erreicht. In diesem Maschinentakt werden vom laufenden Belagpapierstreifen die einzelnen Belagblättchen abgetrennt.

Im Filterbereich erhält die Umhüllung der Zigaretten häufig eine Zone gewünschter Luftdurchlässigkeit, die durch Perforationen der Hülle erzeugt wird. Durch diese Perforationen oder kleinen Löcher strömt beim Ziehen an den Zigaretten von außen Luft in das Innere, die die Abrauchwerte der Zigaretten günstig beeinflußt. Die Perforationen können in die Umhüllung der fertigen Filterzigaretten oder in den Belagpapierstreifen eingebracht werden, bevor von diesem die Belagblättchen abgetrennt und zum Verbinden der Komponenten der Filterzigaretten um diese herumgewickelt werden. Eine Anordnung, die dies zeigt, ist in der US-PS 4 281 670 beschrieben.

Aus dieser Schrift ist es bekannt, den Belagpapierstreifen in einer Filteransetzmaschine mit einer von einem Laser abgegebenen Strahlung entlang parallel zu den Streifenrändern verlaufenden Linien, hier auch als 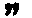 Perforationsspuren" bezeichnet, zu perforrieren. Dazu wird ein Laser eingesetzt, dessen Strahlung entsprechend der gewünschten Anzahl der Perforationsspuren in Teilstrahlen aufgeteilt wird, die durch Strahlungsführungsmittel in Gestalt von Spiegeln, Strahlungsteilern (teildurchlässigen Spiegeln) und Linsensystemen in die Perforationszonen gelenkt und dort auf den Belagpapierstreifen fokussiert werden. Der Laser ist mit hoher Frequenz gepulst, so daß die abgegebene Laserstrahlung aus einer Folge von sehr kurzen Strahlungspulsen besteht, die im Belagpapierstreifen in den Perforationsspuren eine Reihe dicht aufeinanderfolgender, sehr kleiner Löcher erzeugt. Das Abtrennen der Belagblättchen vom Belagpapierstreifen erfolgt nach dem Einbringen der Perforationen mittels einer mechanischen Schneideinrichtung.

Durch die DE 41 22 273 A1 ist eine mit einem Laserstrahl arbeitende Schneideinrichtung zum Abtrennen von Belagblättchen von einem laufenden Belagpapierstreifen bekannt. Diese Schneideinrichtung arbeitet mit einer kontinuierlichen Laserstrahlung, die in den Pausen zwischen den Schnitten durch eine Abblendvorrichtung mit einer rotierenden Scheibe mit radialen Fenstern unterbrochen wird. Eine Perforiereinrichtung ist in der in dieser Schrift dargestellten Vorrichtung nicht enthalten.

Die DE 41 22 274 A1 beschreibt eine Filterbestückungs- oder Filteransetzmaschine mit einer Perforiereinrichtung für die Zigaretten und einer Schneideinrichtung für den laufenden Belagpapierstreifen. In dieser Filteransetzmaschine ist das Schneiden des Belagpapiers und das Perforieren der Zigarettenhülle mittels der Strahlung von ein und demselben Laser vorgesehen. Das geschieht dadurch, daß die Strahlung des Lasers geteilt und die Teilstrahlen ihrer Verwendung zum gleichzeitigen Schneiden und Perforieren zugeführt werden. Die Strahlteilung hat den Nachteil, daß für das Schneiden und das Perforieren entsprechend dem Teilungsverhältnis der Strahlteilung jeweils nur ein Anteil der Laserleistung zur Verfügung steht, so daß zur Erzielung ausreichender Schneid- und Perforationsergebnisse ein Laser entsprechend höherer Leistung eingesetzt werden muß.

Der Erfindung liegt die Aufgabe zugrunde, ein weiteres Verfahren und eine weitere Vorrichtung der eingangs beschriebenen Art anzugeben. Dabei wird besonders eine optimale Ausnutzung der Laserleistung angestrebt.

Bei einem Verfahren der eingangs angegebenen Art wir diese Aufgabe erfindungsgemäß dadurch gelöst, daß mit dem Laser unterschiedliche Strahlungspulse erzeugt werden und daß die unterschiedlichen Strahlungspulse zur Ausführung von unterschiedlichen Bearbeitungsvorgängen in die Bearbeitungszone geleitet und fokussiert werden. In Fortführung der Erfindung ist vorgesehen, daß in einem ersten Zeitintervall mit dem Laser eine erste gepulste Laserstrahlung einer ersten Pulslänge erzeugt wird, daß mit demselben Laser in einem zweiten Zeitintervall eine Laserstrahlung einer zweiten Pulslänge erzeugt wird und daß mit der in aufeinanderfolgenden Zeitintervallen unterschiedlichen Laserstrahlung desselben Lasers nacheinander unterschiedliche Bearbeitungsvorgänge am Hüllmaterial ausgeführt werden.

Gemäß der Erfindung werden die erforderlichen Bearbeitungsvorgänge also nicht mehr mit dem Mittel der Strahlteilung gleichzeitig, sondern innerhalb eines jeden Maschinentaktes jeweils nacheinander ausgeführt. Dadurch steht für jeden der Bearbeitungsvorgänge die ganze Laserleistung zur Verfügung. Gleichzeitig wird die Laserleistung besser ausgenutzt, weil die Zeiten des Ausblendens oder Abblendens der Laserstrahlung zwischen Bearbeitungsvorgängen zumindest erheblich verkürzt ist.

In weiterer Ausbildung der Erfindung ist vorgesehen, daß innerhalb des ersten Zeitintervalls wenigstens ein Laserpuls einer ersten Pulslänge erzeugt wird, die vorzugsweise wenigstens angenähert der Länge des ersten Zeitintervalls gleich ist, und daß innerhalb des zweiten Zeitintervalls eine mit einer zweiten kurzen Pulslänge gepulste Laserstrahlung zum Perforieren des Hüllmaterials erzeugt wird. Mit dieser im ersten Zeitintervall erzeugten Laserstrahlung mit der ersten, längeren Pulslänge können gemäß der Erfindung vom Hüllmaterialstreifen Hüllmaterialblättchen, insbesondere von einem Belagpapierstreifen Belagblättchen abgetrennt werden. Die während eines jeden Maschinentakts erzeugte Laserstrahlung wird also nacheinander abwechselnd zum Perforieren des Hüllmaterials und zum Abtrennen von Abschnitten von dem Hüllmaterialstreifen genutzt.

Die zeitliche Aufteilung eines Maschinentaktes auf das erste und das zweite Zeitintervall wird sich nach den gegebenen Bedingungen richten müssen. Derzeit erscheint es vorteilhaft, wenn das erste und das zweite Zeitintervall eines jeden Maschinentaktes etwa gleich lang sind.

Eine wichtige Weiterbildung der Erfindung besteht darin, daß ein Streifen des Hüllmaterials durch eine Perforationszone bewegt wird und daß die gepulste Laserstrahlung innerhalb des zweiten Zeitintervalls eines jeden Maschinentaktes zum Perforieren des Hüllmaterialstreifens in diese Perforationszone gelenkt und auf zu perforierende Längenabschnitte des Hüllmaterialstreifens fokussiert wird. Hierbei wird es sich in erster Linie um einen Belagpapierstreifen handeln, der vor dem Abtrennen der Belagblättchen online mit den gewünschten Perforationen versehen wird. Um die Dauer des für die Perforation des Belagpapierstreifens benutzten zweiten Zeitintervalls zu verkürzen und im ersten Zeitintervall mehr Zeit für das Abtrennen der Belagblättchen zu gewinnen, sieht eine bevorzugte Fortführung der Erfindung vor, daß die gepulste Laserstrahlung innerhalb des zweiten Zeitintervalls eines jeden Maschinentaktes zum Perforieren des Hüllmaterialstreifens entlang dem einer Zigarette zugeordneten Längenabschnitt des Hüllmaterialstreifens parallel zur Bewegungsrichtung des Hüllmaterials aus einer ersten Position, in der der Laserstrahl am Anfang des zu perforierenden Längenabschnitts des Hüllmaterials steht, in eine zweite Position, in der der Laserstrahl am Ende des zu perforierenden Längenabschnitts des Hüllmaterials steht, ausgelenkt wird. Diese Bewegung des Laserstrahls durch die Perforationszone, die vorzugsweise entgegen der Bewegungsrichtung des Belagpapierstreifens erfolgt, erlaubt eine schnellere Einbringung der Perforationen in den laufenden Belagpapierstreifen und verbessert somit die Bedingungen für das Abtrennen der Belagblättchen im ersten Zeitintervall des Maschinentakts.

Eine vorteilhafte Variante der Erfindung besteht darin, daß mit Abschnitten des Hüllmaterials umhüllte stabförmige Artikel nacheinander durch eine Perforationszone gefördert werden und daß die gepulste Laserstrahlung innerhalb des zweiten Zeitintervalls eines jeden Maschinentaktes zum Perforieren des Hüllmaterialstreifens in diese Perforationszone gelenkt und auf zu perforierende Längenabschnitte des Hüllmaterialstreifens fokussiert wird. Damit werden die Perforationen also in die äußere Umhüllung der fertigen Zigaretten eingebracht. Eine das Abtrennen der Belagblättchen vom laufenden Belagpapierstreifen betreffende vorteilhafte Ausgestaltung des erfindungsgemäß vorgeschlagenen Verfahrens besteht darin, daß die innerhalb des ersten Zeitintervalls eines jeden Maschinentakts erzeugte Laserstrahlung längerer Pulslänge zum Abtrennen von Hüllmaterialblättchen von einem Hüllmaterialstreifen in eine Schneidzone gelenkt, dort auf das Hüllmaterial fokussiert und quer zur Förderrichtung über den Hüllmaterialstreifen bewegt wird. Es wird darauf hingewiesen, daß die Bezeichnungen 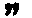 erstes Zeitintervall" und 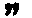 zweites Zeitintervall" lediglich zur Kenntlichmachung gewählt wurden und nicht die zeitliche Aufeinanderfolge der Zeitintervalle innerhalb eines Maschinentakts festlegen. So kann das 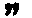 zweite Zeitintervall" in einem Maschinentakt auch das erste sein.

Bei einer Vorrichtung der eingangs beschriebenen Art wird die der Erfindung zugrunde liegende Aufgabe dadurch gelöst, daß der Laser unterschiedliche Strahlungspulse abgebend ausgebildet ist und daß die Strahlführungsmittel die unterschiedlichen Strahlungspulse zur Ausführung unterschiedlicher Bearbeitungsvorgänge in die Bearbeitungszone leitend und fokussierend ausgebildet und angeordnet sind. Dabei ist der Laser mit einer Steueranordnung verbunden, durch welche er derart steuerbar ist, daß er in einem ersten Zeitintervall eines Maschinentaktes eine gepulste Laserstrahlung mit einer ersten und in einem zweiten Zeitintervall desselben Maschinentaktes eine Laserstrahlung mit einer zweiten Pulslänge abgibt, und daß die Strahlführungsmittel die Laserstrahlung mit der ersten Pulslänge und die Laserstrahlung mit der zweiten Pulslänge zur Ausführung verschiedener Bearbeitungsvorgänge in die Bearbeitungszone leitende Strahlumlenkungsmittel aufweisen.

Fortführungen, Weiterbildungen und vorteilhafte Ausgestaltungen der Vorrichtung nach der Erfindung sind in den Unteransprüchen 14 bis 28 angegeben.

Dabei betreffen die Ansprüche 14 bis 19 Ausbildungen der Bearbeitungszonen als Perforationszone und Schneidzone sowie die Führung der während eines Maschinentakts unterschiedlich gepulsten Laserstrahlung abwechselnd in diese beiden Bearbeitungszonen. Die Ansprüche 21 und 22 betreffen eine besonders vorteilhafte Ausbildung der Strahlführung, die es erlaubt, den Zeitbedarf für das Perforieren des Belagpapierstreifens zu reduzieren und innerhalb eines Maschinentaktes einen größeren Zeitanteil für den Trennschnitt zu gewinnen, die Laserstrahlung also optimal zu nutzen. Anspruch 23 enthält eine bevorzugte Zuordnung der Vorrichtung, und die Ansprüche 24 bis 28 sind auf Ausgestaltungen der Strahlungsumlenkeinrichtung gerichtet, welche die unterschiedlich gepulste Laserstrahlung abwechselnd in die beiden Bearbeitungszonen umlenkt.

Der Vorteil der vorliegenden Erfindung besteht darin, daß für das Perforieren und Schneiden eines Materialstreifens, insbesondere eines Belagpapierstreifens in einer Filteransetzmaschine der tabakverarbeitenden Industrie, ein einziger Laser ausreicht. Da der Laserstrahl nicht geteilt und zum gleichzeitigen Perforieren und Schneiden gleichzeitig in die Perforationszone und in die Schneidzone gelenkt wird, sondern zum aufeinanderfolgenden Perforieren und Schneiden abwechselnd nacheinander in die Perforationszone und in die Schneidzone gelenkt wird, kann ein Laser geringerer Leistung eingesetzt werden. Durch optimale Ausnutzung der Strahlungsenergie des Lasers ergibt sich auf diese Weise eine wesentlich rationellere Arbeitsweise der Perforier- und Schneidvorrichtung als sie bei entsprechenden Vorrichtungen bisher bekannt ist.

Die Erfindung wird nun anhand der Zeichnungen näher erläutert. Es zeigen
- Figur 1: eine Vorderansicht einer Filteransetzmaschine zur Herstellung von Filterzigaretten mit einer integrierten Vorrichtung nach der Erfindung,
- Figur 2: eine schematische Darstellung eines Ausführungsbeispiels einer Vorrichtung nach der Erfindung zum Schneiden und Perforieren einer Materialbahn,
- Figur 3: eine Ansicht einer zu verwendenden Shutterscheibe und
- Figur 4: ein Diagramm der Laserstrahlung innerhalb eines Maschinentakts.

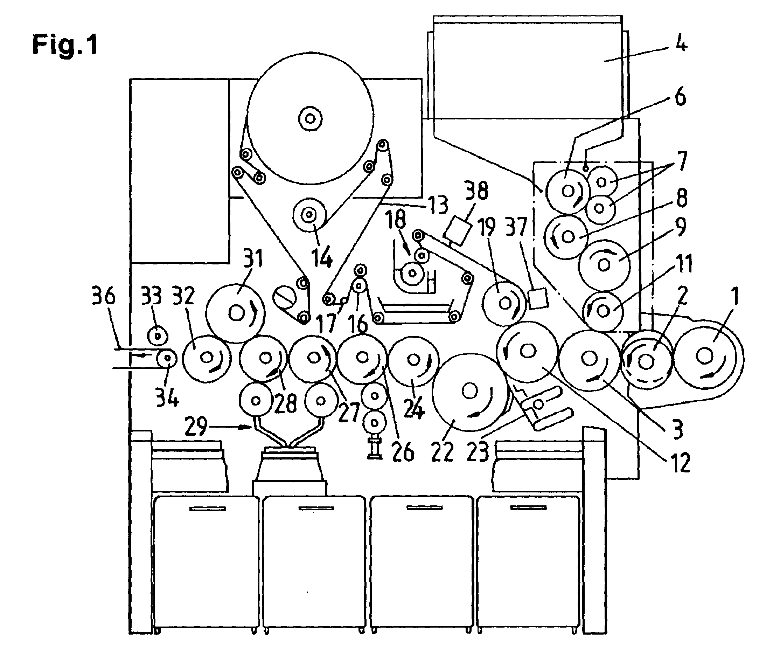

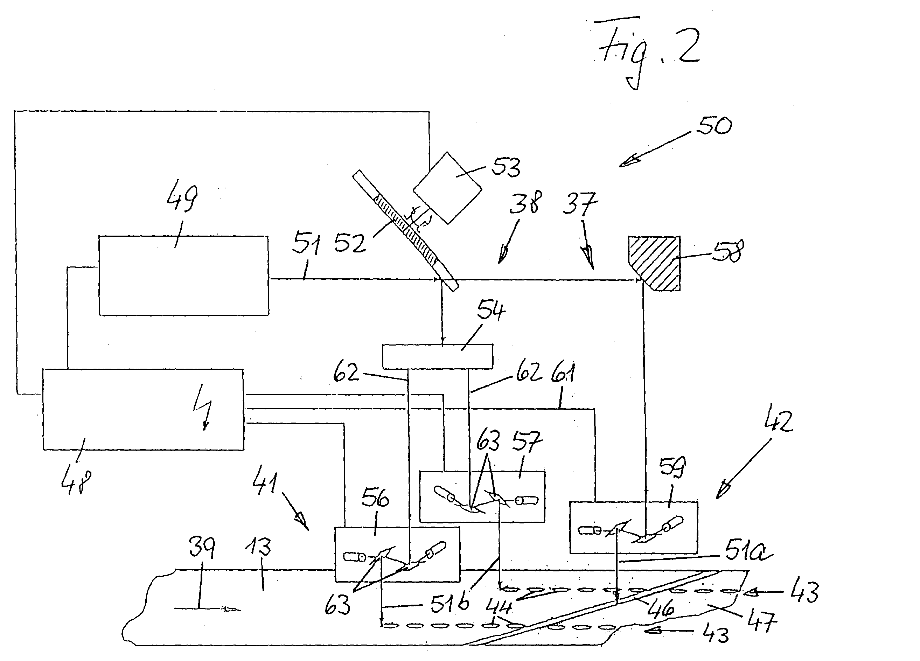

Bei der in Figur 1 dargestellten Maschine handelt es sich um eine Filteransetzmaschine vom Typ MAX der Hauni Maschinenbau AG mit einer entsprechend der Erfindung ausgebildeten und arbeitenden Perforier- und Schneidvorrichtung. Eine solche Filteransetzmaschine ist beispielsweise durch die US-PS 4 281 670 bekannt. Sie weist die folgenden Einzelheiten auf. Eine Einlauftrommel 1 übergibt die auf einer Zigarettenherstellmaschnine produzierten Zigaretten in zwei Staffeltrommeln 2, welche die gestaffelt zugeführten Zigaretten entstaffeln und in Reihen zu je zwei Stück mit einem Zwischenraum zwischen den Zigaretten an eine Zusammenstelltrommel 3 abgeben. Die Filterstäbe gelangen aus einem Magazin 4 auf eine Schneidtrommel 6, werden von zwei Kreismessern 7 zu Filterstopfen doppelter Gebrauchslänge geschnitten, auf einer Staffeltrommel 8 gestaffelt, von einer Schiebetrommel 9 zu einer Reihe hintereinanderliegender Stopfen ausgerichtet und von einer Beschleunigertrommel 11 in die Zwischenräume der Zigarettenreihen auf der Zusammenstelltrommel 3 abgelegt. Die so gebildeten Zigarette- Filter- Zigarette- Gruppen werden zusammengeschoben, so daß sie axial dicht an dicht liegen. Anschließend werden sie von einer Übergabetrommel 12 übernommen. Ein Belagpapierstreifen 13 wird von einer Bobine 14 mittels Abzugswalzen 16 abgezogen. Der Streifen 13 wird um einen eine scharfe Kante aufweisenden Vorbrecher 17 herumgelenkt, von einer Beleimvorrichtung 18 beleimt und auf einer Schneidtrommel 19 geschnitten. Die abgetrennten Belagblättchen (Verbindungsblättchen) werden an die Zigaretten- Filter- Gruppen auf der Übergabetrommel 12 angeheftet und auf einer Rolltrommel 22 mittels einer Rollhand 23 um die Zigaretten- Filter- Gruppen herumgerollt. Die fertigen Gruppen Doppelfilterzigaretten werden über eine Trockentrommel 24 einer Schneidtrommel 26 zugeführt und auf dieser durch mittiges Schneiden durch die Filterstopfen hindurch zu Einzelfilterzigaretten konfektioniert, wobei gleichzeitig fehlerhafte Filterzigaretten ausgeworfen werden. Eine mit einer Übergabetrommel 27 und einer Sammeltrommel 28 zusammenwirkende Wendeeinrichtung 29 wendet eine Filterzigarettenreihe und überführt sie gleichzeitig in die über die Übergabetrommel 27 und die Sammeltrommel 28 durchlaufende ungewendete Filterzigarettenreihe. Über eine Prüftrommel 31 gelangen die Filterzigaretten zu einer Auswerftrommel 32, auf welcher vor dem Auswerfvorgang außerdem die Kopfabtastung der Filterzigaretten erfolgt. Eine mit einer Bremstrommel 33 zusammenwirkende Ablegertrommel 34 legt die Filterzigaretten auf ein Ablegerband 36. Mit 37 ist eine Trennanordnung und mit 38 eine Perforiereinrichtung bezeichnet, die in Figur 2 zum Teil in Perspektive schematisch dargestellt sind.

In Figur 2 ist ein Ausführungsbeispiel der Vorrichtung nach der Erfindung dargestellt. Mit 13 ist wie in Figur 1 die laufende Materialbahn, im dargestellten Ausführungsbeispiel ein Belagpapierstreifen zum Verbinden von Zigarette-Filter-Zigarette-Gruppen auf einer Filteransetzmaschine, bezeichnet, die in Pfeilrichtung 39 nacheinander im Bereich der Perforiereinrichtung 38 eine Perforationszone 41 und im Bereich der Trennanordnung 37 eine Schneidzone 42 durchläuft. In der Perforationszone werden in zwei parallelen Perforationsspuren 43 mittels noch zu beschreibender Laserstrahlung Perforationen 44 in Form von fast unsichtbar kleinen Löchern erzeugt. Die in Figur 2 dargestellten Perforationslöcher sind wegen der besseren Erkennbarkeit übertrieben groß dargestellt. In der Schneidzone 42 werden mittels Laserstrahlung, die entlang einer Schnittlinie 46 quer über den Belagpapierstreifen 13 bewegt wird, Abschnitte, sogenannte Belagblättchen 47, abgetrennt. Die Perforationszone 41 und die Schneidzone 42 sind in Figur 2 unmittelbar aufeinanderfolgend dargestellt. Tatsächlich können sie, wie es die Figur 1 zeigt, auch in größerem Abstand zueinander angeordnet sein.

Die Vorrichtung weist einen von einer Steueranordnung 48 gesteuerten Laser 49 auf, der eine Laserstrahlung 51 abgibt. Als Laser kommt beispielsweise ein CO₂ - Laser vom Typ Diamond 84 oder K500 der Firma Coherent in Frage. Der Laser 49 wird gemäß der Erfindung durch die Steueranordnung 48 so betrieben, daß er in aufeinanderfolgenden Zeitintervallen I₁ und I₂ unterschiedliche Strahlungspulse abgibt (siehe auch Figur 3). In dem ersten Zeitintervall I₁ gibt der Laser einen langen Strahlungspuls P₁ ab, dessen Länge im dargestellten Fall der Dauer des Zeitintervalls I₁ nahezu gleich ist. In dem Diagramm der Figur 3 ist die Zeit t gegen die Energie E der Laserpulse P₁ und P₂ aufgetragen. Das Diagramm zeigt einen Maschinentakt T, der in zwei Zeitintervalle I₁ und I₂ aufgeteilt ist. Als Maschinentakt wird ein Zeitabschnitt angesehen, in dem der Belagpapierstreifen 13 sich gerade um die Länge eines Abschnitts oder Belagblättchens 47 vorwärts bewegt. Ein Maschinentakt ist also auch der Zeitraum zwischen zwei aufeinanderfolgenden Schnitten des Strahlungspulses in der Schneidzone 42.

Im ersten Zeitintervall I₁ des Maschinentaktes erzeugt der Laser 49, wie erwähnt, einen Strahlungspuls P_{1,} dessen Länge der Länge des Zeitintervalls etwa gleich ist. Kurze Zeitabschnitte t₁ und t₂ am Anfang und am Ende des Strahlungspulses bilden eine Anlaufphase und eine Auslaufphase des Strahlungspulses P₁. Im zweiten Zeitintervall I₂ desselben Maschinentaktes T gibt der Laser 49 eine Pulsfolge P₂ ab, die aus einer Reihe schnell aufeinanderfolgender, sehr kurzer Strahlungspulse P₃ besteht. Die Frequenz der Pulse P₃ hängt von der Maschinengeschwindigkeit und einem vorgegebenen Perforationsmuster, das auf der Materialbahn erzeugt werden soll, ab. Eine Anlaufphase t₃ leitet die Folge P₂ kurzer Strahlungspulse P₃ ein, in einer Auslaufphase t₄ endet diese Folge von Strahlungspulsen. Die Figur 3 zeigt, daß das erste Zeitintervall I₁ und das zweite Zeitintervall I₂ in einem einzigen Maschinentakt T liegen und etwa gleich lang sind. Je nach den Anforderungen können die Zeitintervalle I₁ und I₂ auch unterschiedlich lang sein.

Der vom Laser 49 abgegebene Laserstrahl 51 weist also in einem ersten Zeitintervall I₁ eines jeden Maschinentaktes T vorzugsweise einen einzigen Laserpuls P₁ auf, während der Laser im zweiten Zeitintervall I₂ eine Folge P₂ von kurzen Strahlungspulsen P₃ erzeugt. Strahlführungsmittel 50 führen die im Laserstrahl 51 enthaltene Folge P₂ von kurzen Strahlungspulsen P₃ in die Perforationszone 41 und den langen Laserpuls P₁ in die Schneidzone 42. Die Strahlführungsmittel 50 weisen dazu eine von einem Motor 53 angetriebene rotierende Shutterscheibe 52 auf, die den Laserstrahl 51 abwechselnd über einen Strahlteiler 54 und Strahlführungs- und -umlenkmittel 56 und 57 in die Perforationszone 41 und über einen Spiegel 58 sowie ebenfalls über Strahlführungs- und -umlenkmittel 59 in die Schneidzone lenkt. Der Antrieb 53 der Shutterscheibe 52 ist von der Steueranordnung 48 synchron zum Laser 49 so gesteuert, daß die langen Strahlungspulse P₁ über den Spiegel 58 und die Strahlführungs- und -umlenkmittel 59 zum Abtrennen der Abschnitte 47 von dem Belagpapierstreifen 13 in die Schneidzone 42 gelenkt werden. Die für das Abtrennen der Abschnitte 47 erforderliche Bewegung des Laserstrahls 51a quer zur Laufrichtung 39 der Materialbahn 13 wird von den Strahlführungs- und -umlenkmitteln 59 erzeugt und von der Steueranordnung 48 synchron zur Strahlerzeugung durch den Laser 49 und zur Rotation der Shutterscheibe 52 gesteuert. Dazu sind die Strahlführungs- und -umlenkmittel 59 über eine Leitung 61 an die Steueranordnung 48 angeschlossen. Für das Abtrennen eines Abschnittes 47 von der Materialbahn 13 wird etwa die Hälfte eines Maschinentaktes T benötigt.

Während der anderen Hälfte des Maschinentaktes T, also im Zeitintervall I₂, besteht der Laserstrahl 51 aus einer Folge P₂ von kurzen Strahlungspulsen P₃, die von der Shutterscheibe 52 über den Strahlteiler 54 in zwei Pulsfolgen 62 aufgeteilt werden. Diese Pulsfolgen 62 werden von den Strahlführungs- und -umlenkmittel 56 und 57 in die Perforationszone 41 gelenkt und auf die Materialbahn 13 fokussiert. Die einzelnen Strahlungspulse P3 der Pulsfolgen 62 erzeugen in den Perforationsspuren 43 zwei parallele Reihen von Perforationen 44. In jedem Maschinentakt T werden auf diese Weise alle in einem Bahnabschnitt von der Länge eines Belagblättchens 47 gewünschten Perforationen erzeugt. Um den Perforationsvorgang zu beschleunigen und die für den nachfolgenden Trennschnitt benötigte Zeit zu gewinnen, werden die gepulsten Laserstrahlen 51b während des Zeitintervalls I₂ parallel zur Bewegungsrichtung des Materialstreifens 13, vorzugsweise entgegen seiner Laufrichtung aus einer ersten Position am Anfang eines Abschnitts in eine zweite Position am Ende eines Abschnitts bewegt. Dadurch kann die Perforation eines Abschnitts von der Länge eines Belagblättchens 47 abgeschlossen werden, bevor der ganze Abschnitt die Perforationszone durchlaufen hat. Es wird also die Zeit für das andere Zeitintervall I₁ des Maschinentakts T, die für den Schneidvorgang erforderlich ist, und für das Rückschwenken der Umlenkmittel 56 und 57 in ihre erste Position gewonnen.

Zum Auslenken der Laserstrahlen 51b parallel zur Bewegungrichtung 39 der Materialbahn 13 sind Strahlauslenkmittel 63 vorgesehen, die in die Strahlführungs- und -umlenkmittel 56 und 57 integriert sind. Solche Strahlführungs- und -umlenkmittel 56, 57 und 59 sind als X/Y-Scanner des Typs HPLK1130-6 der Firma General Scanning kommerziell erhältlich.

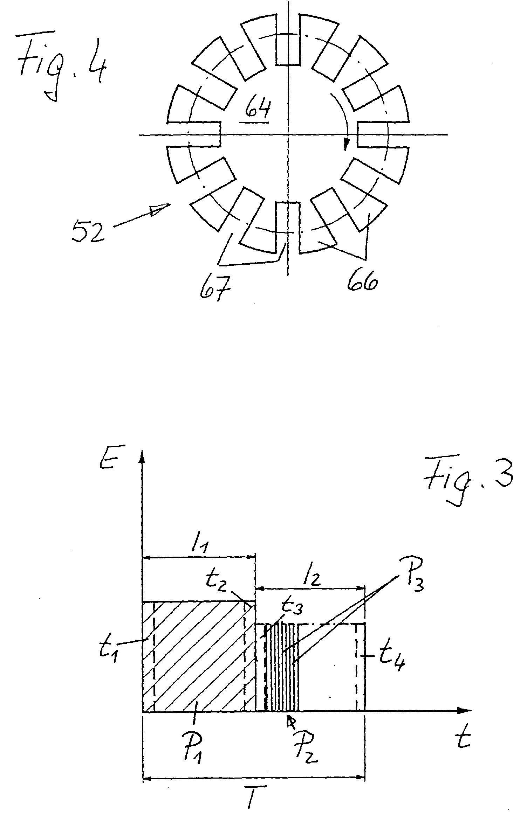

Die Ausbildung einer Shutterscheibe 52 für die Verwendung in einer Vorrichtung der beschriebenen Art ist in Figur 4 in einer Vorderansicht dargestellt. Sie besteht aus einer Scheibe 64, die an ihrem Umfang abwechselnd Zähne 66 und Schlitze 67 aufweist. Die Oberflächen der Zähne können verspiegelt sein, um den gepulsten Anteil der Laserstrahlung 51 möglichst verlustfrei zur Perforationszone zu reflektieren. Der nicht gepulste Dauerstrichanteil der Laserstrahlung 51 gelangt ungehindert durch die Schlitze 67 zum Spiegel 58 und in die Schneidzone 42.

## Patentansprüche

1. Verfahren zum Bearbeiten eines Bahnmaterials, insbesondere eines Hüllmaterials von Zigaretten oder von anderen rauchbaren stabförmigen Artikeln der tabakverarbeitenden Industrie, bei dem das Hüllmaterial durch wenigstens eine Bearbeitungszone bewegt und in der Bearbeitungszone mittels einer von einem Laser abgegebenen und auf das Hüllmaterial fokussierten Strahlung bearbeitet wird, **dadurch gekennzeichnet, daß** mit dem Laser unterschiedliche Strahlungspulse erzeugt werden und daß die unterschiedlichen Strahlungspulse zur Ausführung von unterschiedlichen Bearbeitungsvorgängen in die Bearbeitungszone geleitet und fokussiert werden.

2. Verfahren nach Anspruch 1, **dadurch gekennzeichnet, daß** in einem ersten Zeitintervall mit dem Laser eine erste gepulste Laserstrahlung einer ersten Pulslänge erzeugt wird, daß mit demselben Laser in einem zweiten Zeitintervall eine Laserstrahlung einer zweiten Pulslänge erzeugt wird und daß mit der in aufeinanderfolgenden Zeitintervallen unterschiedlichen Laserstrahlung desselben Lasers nacheinander unterschiedliche Bearbeitungsvorgänge am Hüllmaterial ausgeführt werden.

3. Verfahren nach Anspruch 2, **dadurch gekennzeichnet, daß** innerhalb des ersten Zeitintervalls wenigstens ein Laserpuls einer ersten Pulslänge und innerhalb des zweiten Zeitintervalls eine mit einer zweiten kurzen Pulslänge gepulste Laserstrahlung zum Perforieren des Hüllmaterials erzeugt wird.

4. Verfahren nach Anspruch 2 oder 3, **dadurch gekennzeichnet, daß** innerhalb des ersten Zeitintervalls ein einziger Laserpuls erzeugt wird, dessen Pulslänge wenigstens angenähert der Länge des ersten Zeitintervalls gleich ist.

5. Verfahren nach einem der Ansprüche 1 bis 4, **dadurch gekennzeichnet, daß** mit der im ersten Zeitintervall erzeugten Laserstrahlung mit der ersten, längeren Pulslänge vom Hüllmaterialstreifen Hüllmaterialblättchen, insbesondere von einem Belagpapierstreifen Belagblättchen abgetrennt werden.

6. Verfahren nach einem der Ansprüche 1 bis 5, **dadurch gekennzeichnet, daß** das erste und das zweite Zeitintervall innerhalb eines Maschinentaktes liegen.

7. Verfahren nach einem der Ansprüche 1 bis 6, **dadurch gekennzeichnet, daß** ein Streifen des Hüllmaterials durch eine Perforationszone bewegt wird und daß im zweiten Zeitintervall die gepulste Laserstrahlung zum Perforieren des Hüllmaterialstreifens in diese Perforationszone gelenkt und auf den Hüllmaterialstreifen fokussiert wird.

8. Verfahren nach Anspruch 7, **dadurch gekennzeichnet, daß** im zweiten Zeitintervall die in die Perforationszone fokussierte, gepulste Laserstrahlung parallel zur Bewegungsrichtung des Hüllmaterials bewegt wird.

9. Verfahren nach Anspruch 7 oder 8, **dadurch gekennzeichnet, daß** die gepulste und auf den Hüllmaterialstreifen fokussierte Laserstrahlung im zweiten Zeitintervall in der Perforationszone entgegen der Bewegungsrichtung des Hüllmaterials aus einer ersten Position in eine zweite Position ausgelenkt und nach Ablauf des zweiten Zeitintervalls in die erste Position zurückgeführt wird.

10. Verfahren nach einem der Ansprüche 1 bis 9, **dadurch gekennzeichnet, daß** mit Abschnitten des Hüllmaterials umhüllte stabförmige Artikel nacheinander durch eine Perforationszone gefördert werden und daß die gepulste Laserstrahlung innerhalb des zweiten Zeitintervalls zum Perforieren des Hüllmaterialstreifens in diese Perforationszone gelenkt und auf zu perforierende Längenabschnitte des Hüllmaterialstreifens fokussiert wird.

11. Verfahren nach einem der Ansprüche 1 bis 10, **dadurch gekennzeichnet, daß** die im ersten Zeitintervall erzeugte Laserstrahlung längerer Pulslänge zum Abtrennen von Hüllmaterialblättchen von einem Hüllmaterialstreifen in eine Schneidzone gelenkt, dort auf das Hüllmaterial fokussiert und quer zur Förderrichtung über den Hüllmaterialstreifen bewegt wird.

12. Vorrichtung zum Bearbeiten eines Bahnmaterials, insbesondere eines Hüllmaterials von Zigaretten oder von anderen rauchbaren stabförmigen Artikeln der tabakverarbeitenden Industrie mit Fördermitteln zum Bewegen des Hüllmaterials durch wenigstens eine Bearbeitungszone, einem Laser zum Erzeugen einer Laserstrahlung und Strahlführungsmitteln zum Leiten und Fokussieren der Laserstrahlung zur Hüllmaterialbearbeitung in die vom Hüllmaterial durchlaufene Bearbeitungszone, **dadurch gekennzeichnet, daß** der Laser (49) unterschiedliche Strahlungspulse (P₁, P₃) abgebend ausgebildet ist und daß die Strahlführungsmittel (59) die unterschiedlichen Strahlungspulse zur Ausführung unterschiedlicher Bearbeitungsvorgänge in die Bearbeitungszone (41, 42) leitend und fokussierend ausgebildet und angeordnet sind.

13. Vorrichtung nach Anspruch 12, **dadurch gekennzeichnet, daß** der Laser (49) mit einer Steueranordnung (48) verbunden ist, durch welche er derart steuerbar ist, daß er in einem ersten Zeitintervall (I₁) eines Maschinentaktes T eine Laserstrahlung mit einer ersten und in einem zweiten Zeitabschnitt (I₂) desselben Maschinentaktes T eine Laserstrahlung mit einer zweiten Pulslänge abgibt, und daß die Strahlführungsmittel (50) die Laserstrahlung mit der ersten Pulslänge und die Laserstrahlung mit der zweiten Pulslänge zur Ausführung verschiedener Bearbeitungsvorgänge in die Bearbeitungszone (41, 42) leitende Strahlumlenkungsmittel (52, 54, 56, 57, 58, 59) aufweisen.

14. Vorrichtung nach Anspruch 12 oder 13, **dadurch gekennzeichnet, daß** die Strahlführungsmittel (50) die Laserstrahlung (51) mit der ersten Pulslänge (I₁) und die Laserstrahlung mit der zweiten Pulslänge (I₂) zur Ausführung verschiedener Bearbeitungsvorgänge in verschiedene Bearbeitungszonen (41,42) leitende Strahlumlenkungsmittel (52, 54, 56, 57, 58, 59) aufweisen.

15. Vorrichtung nach Anspruch 14, **dadurch gekennzeichnet, daß** eine der Bearbeitungszonen als Perforationszone (41) ausgebildet ist.

16. Vorrichtung nach einem der Ansprüche 12 bis 15, **dadurch gekennzeichnet, daß** Mittel (48) zum Pulsen der Laserstrahlung im zweiten Zeitintervall (I₂) eines jeden Maschinentaktes T mit einer von der Maschinengeschwindigkeit und einem vorgegebenen Perforationsmuster des zu perforierenden Hüllmaterials (13) abhängigen Frequenz vorgesehen sind.

17. Vorrichtung nach einem der Ansprüche 12 bis 16, **dadurch gekennzeichnet, daß** die zweite Bearbeitungszone als Schneidzone (42) ausgebildet ist.

18. Vorrichtung nach einem der Ansprüche 12 bis 17, **dadurch gekennzeichnet, daß** der Laser (49) im ersten Zeitintervall (I₁) eines jeden Maschinentaktes T eine Laserstrahlung (51) in Form eines einzigen Laserpulses P₁ abgibt.

19. Vorrichtung nach einem der Ansprüche 12 bis 18, **dadurch gekennzeichnet, daß** als Fördermittel eine einen Hüllmaterialstreifen (13), insbesondere einen Belagpapierstreifen, entlang einer Förderbahn durch eine Perforationszone (41) und durch eine Schneidzone (42) bewegende Fördereinrichtung (16, 19) vorgesehen ist und daß die Strahlführungs- und Strahlumlenkungsmittel (52, 54, 56, 57, 58, 59) derart ausgebildet und angeordnet sind, daß sie die gepulste Laserstrahlung (P₂) mit der kurzen Pulslänge (P₃) in die Perforationszone (41) und die Laserstrahlung mit der zweiten Pulslänge (P₁) in die Schneidzone (42) fokussieren.

20. Vorrichtung nach einem der Ansprüche 15 bis 19, **dadurch gekennzeichnet, daß** die Strahlführungsmittel (52, 54, 56, 57, 58, 59) Mittel (56, 57) zum Fokussieren der im zweiten Zeitintervall (I₂) gepulsten Laserstrahlung (51) in die Perforationszone (41) und Strahlauslenkmittel (63) zum Bewegen der gepulsten Laserstrahlung (51b) in der Perforationszone parallel zur Bewegungsrichtung (39) des Hüllmaterials (13) aufweisen.

21. Vorrichtung nach Anspruch 20, **dadurch gekennzeichnet, daß** Strahlauslenkmittel (63) vorgesehen sind, welche die gepulste und auf den Hüllmaterialstreifen (13) fokussierte Laserstrahlung (51b) im zweiten Zeitintervall (I₂) in der Perforationszone (41) entgegen der Bewegungsrichtung (39) des Hüllmaterials (13) aus einer ersten Position in eine zweite Position auslenken und nach Ablauf des ersten Zeitintervalls in die erste Position zurückführen.

22. Vorrichtung nach einem der Ansprüche 12 bis 21, **dadurch gekennzeichnet, daß** die Fördermittel eine erste einen Hüllmaterialstreifen, insbesondere einen Belagpapierstreifen, entlang einer ersten Förderbahn durch eine Schneidzone und eine zweite, fertige Zigaretten entlang einer zweiten Förderbahn durch eine Perforationszone bewegende Fördereinrichtung aufweisen.

23. Vorrichtung nach einem der Ansprüche 12 bis 22, **dadurch gekennzeichnet, daß** sie in eine Filteransetzmaschine zum Herstellen von Filterzigaretten integriert ist.

24. Vorrichtung nach einem der Ansprüche 12 bis 23, **dadurch gekennzeichnet, daß** Strahlungsführungsmittel (50) als Strahlungsumlenkeinrichtung eine Wechseleinrichtung (52) aufweisen, welche die Laserstrahlung (51) abwechselnd in die Perforationszone (41) und in die Schneidzone (42) umlenkend ausgebildet ist.

25. Vorrichtung nach Anspruch 24, **dadurch gekennzeichnet, daß** als Wechseleinrichtung eine in den Strahlengang der Laserstrahlung (51) greifende, rotierende Shutterscheibe (52) vorgesehen ist und daß die Shutterscheibe einen zu ihrer Drehachse konzentrischen Kreisringbereich aufweist, in welchem in Umfangsrichtung hintereinander die Laserstrahlung reflektierende Flächenabschnitte (66) und die Laserstrahlung durchlassende Ausnehmungen (67) einander abwechseln.

26. Vorrichtung nach Anspruch 25, **dadurch gekennzeichnet, daß** die reflektierenden Flächenabschnitte (66) der Shutterscheibe (52) schräg zum Strahlengang der Laserstrahlung (51) ausgerichtet sind und daß sie den sie treffenden Teil der Laserstrahlung entsprechend ihrer Ausrichtung umlenken.

27. Vorrichtung nach Anspruch 25 oder 26, **dadurch gekennzeichnet, daß** die Shutterscheibe (52) eine ebene Oberfläche mit verspiegelten Flächenabschnitten (66) aufweist und um eine schräg zum Strahlengang der Laserstrahlung verlaufende Achse rotiert.

28. Vorrichtung nach einem der Ansprüche 25 bis 27, **dadurch gekennzeichnet, daß** der konzentrische Kreisringbereich der Shutterscheibe (52) mit den die Laserstrahlung (51) reflektierenden Flächenabschnitten (66) und den die Laserstrahlung durchlassenden Ausnehmungen (67) im äußeren radialen Randbereich der Stutterscheibe angeordnet ist.
